# EUROPÄISCHE PATENTSCHRIFT

(11) **EP 2 736 733 B1**
(45) Veröffentlichungstag und Bekanntmachung des Hinweises auf die Patenterteilung: **02.03.2016**
(21) Anmeldenummer: 12781084.4
(22) Anmeldetag: 31.10.2012
(51) Int. Cl.: B60B 35/00, B60G 9/00, B60G 7/00, B60G 21/05

(54) **FAHRWERKSYSTEM FÜR NUTZFAHRZEUGE**
CHASSIS SYSTEM FOR COMMERCIAL VEHICLES
SYSTÈME DE CHÂSSIS POUR VÉHICULES UTILITAIRES

(30) Priorität: 16.11.2011 DE 102011086481
(43) Veröffentlichungstag der Anmeldung: 04.06.2014
(73) Patentinhaber: SAF-HOLLAND GmbH, 63856 Bessenbach (DE)
(72) Erfinder: DREWES, Olaf, 63743 Aschaffenburg (DE)
(74) Vertreter: Müller Schupfner & Partner Patent- und Rechtsanwaltspartnerschaft mbB
(86) Internationale Anmeldenummer: PCT/EP2012/071533
(87) Internationale Veröffentlichungsnummer: WO 2013/072192

(56) Entgegenhaltungen:
- EP-A1- 1 125 775
- WO-A1-2008/055958
- WO-A1-2009/053491
- DE-A1- 19 733 158
- DE-U1- 20 119 641
- FR-A1- 2 888 559
- FR-A5- 2 103 756
- US-B1- 6 565 159

## Beschreibung

Die vorliegende Erfindung betrifft ein Fahrwerksystem für Nutzfahrzeuge gemäß Anspruch 1.

Fahrwerksysteme der in der Rede stehenden Art sind aus dem Stand der Technik bekannt. So wird zumeist die Fahrzeugachse für ein Nutzfahrzeug über ein oder mehrere Lenkerelemente und Federelemente am Fahrzeugrahmen federnd gelagert, wobei die Verbindung zwischen dem oder den Lenkerelementen und der Fahrzeugachse bevorzugt mittels Schweißverfahren hergestellt ist. Nachteilig bei Schweißverfahren ist es, dass durch den hohen lokalen Temperatureintrag in das Lenkerelement und die Fahrzeugachse Gefügestörungen und Materialspannun-gen auftreten können. Als alternative Lösung ist die kraftschlüssige Verbindung von Fahrzeugachse und Lenkerelement, insbesondere durch Aufweiten der Fahrzeugachse im Bereich des Lenkerelementes, bekannt, wobei jedoch die kraftschlüssige Verbindung oft nicht ausreichend ist, um die hohen Torsions- und Biegemomente, die auf das Lenkerelement und die Fahrzeugachse einwirken, übertragen zu können. Jedes der Dokumente EP1125775, WO 2009/053491 und WO 2008/055958 offenbart ein relenvantes Fahrwezusystem nach der Stand der Technik.

Aufgabe der vorliegenden Erfindung ist es, ein Fahrwerksystem bereitzustellen, welches auf einfache Weise herzustellen ist und den Festigkeitsanforderungen für den Einsatz in Nutzfahrzeugen genügt.

Diese Aufgabe wird gelöst mit einem Fahrwerksystem gemäß den unabhängigen Ansprüchen 1 und 12 und einem Verfahren zur Herstellung eines Fahrwerksystems für Nutzfahrzeuge gemäß dem unabhängigen Anspruch 13. Weitere Vorteile und Merkmale der Erfindung ergeben sich aus den abhängigen Ansprüchen.

Erfindungsgemäß umfasst das Fahrwerksystem für Nutzfahrzeuge ein Achsstummelelement und ein Lenkerelement, wobei das Lenkerelement eine Aussparung und das Achsstummelelement einen ersten Befestigungsabschnitt aufweist, wobei der erste Befestigungsabschnitt in der Aussparung des Lenkerelements angeordnet ist und aufgrund eines Umformvorgangs kraftschlüssig an der Aussparung festgelegt ist und wobei zwischen dem ersten Befestigungsabschnitt und der Aussparung eine adhäsive Schicht vorgesehen ist, über die ein Stoffschluss zwischen dem ersten Befestigungsabschnitt des Achsstummelelements und der Aussparung des Lenkerelements gebildet ist. Das Achsstummelement ist bevorzugt zumindest bereichsweise rotationssymmetrisch ausgebildet und dient in erster Linie dazu, weitere Komponenten des Fahrwerksystems drehbar zu lagern. Dazu weist das Achsstummelelement insbesondere bevorzugt Bereiche, bzw. Flächen auf, auf denen Wälzkörper eines Wälzlagers abrollen können, um beispielsweise die drehbare Nabe des Fahrzeugrades eines Nutzfahrzeuges drehbar an dem Fahrwerksystem zu lagern. Das Achsstummelelement weist erfindungsgemäß einen ersten Befestigungsabschnitt auf, über welchen das Achsstummelelement in einer Aussparung des Lenkerelements festlegbar ist. Bevorzugt ist der erste Befestigungsabschnitt des Achsstummelelements, ebenfalls rotationssymmetrisch ausgelegt, beispielsweise als Hohlkörper bzw. rohrförmig, und weist insbesondere bevorzugt eine Außenkontur auf, welche im Wesentlichen mit der Innenkontur der Aussparung des Lenkerelements korrespondiert und in diese eingeführt werden kann. Alternativ bevorzugt ist sowohl die Außenkontur des ersten Befestigungsabschnittes des Achsstummelelements als auch die Innenkontur der Aussparung des Lenkerelements eckig oder quaderförmig ausgebildet, bzw. weist einen rechteckigen Querschnitt auf, wobei bei dieser bevorzugten Ausführungsform das Achsstummelement formschlüssig gegen Verdrehung relativ zum Lenkerelement gesichert ist. Um das Achsstummelement am Lenkerelement festzulegen, ist es bevorzugt, dass der erste Befestigungsabschnitt zumindest bereichsweise derart umgeformt ist, dass eine kraftschlüssige Verbindung zwischen dem ersten Befestigungsabschnitt und der Aussparung des Lenkerelements gebildet ist. Dabei ist es insbesondere bevorzugt, dass der erste Befestigungsabschnitt nach dem Einführen in die Aussparung, beispielsweise mittels eines Innenhochdruck-Umformverfahrens (abgekürzt IHU), derart aufgeweitet wird, dass die Außenkontur des ersten Befestigungsabschnittes gegen die Innenkontur der Aussparung des Lenkerelements presst und das Achsstummelelement auf diese Weise kraftschlüssig mit dem Lenkerelement verbunden ist. Um die kraftschlüssige Verbindung zwischen Achsstummelelement und Lenkerelements zu verstärken, ist erfindungsgemäß eine adhäsive Schicht zwischen dem ersten Befestigungsabschnitt und der Aussparung vorgesehen, um einen Stoffschluss zwischen den beiden gegenüberliegenden Flächen des ersten Befestigungsabschnittes und des Achsstummelelements herzustellen. Mit anderen Worten stellt die adhäsive Schicht eine Klebverbindung zwischen dem Lenkerelement und dem Achsstummelelement her. In besonders vorteilhafter Weise verstärkt die adhäsive Schicht nicht nur die Verbindung zwischen Lenkerelement und Achsstummelelement, sondern verhindert auch das Eindringen von Feuchtigkeit oder Schadstoffen in den Kontaktbereich zwischen Lenkerelement und Achsstummelelement. Auf diese Weise kann insbesondere bevorzugt die Lebensdauer bzw. die Standzeit der kraftschlüssigen bzw. stoffschlüssigen Verbindung von Lenkerelement und Achsstummelelement erhöht werden. Besonders bevorzugt ist das Achsstummelelement einstückig ausgeführt. Auf diese Weise kann die Anzahl zu montierender Teile und damit die Montage des gesamten Fahrwerkssystems reduziert werden. Mit Vorteil wird das Achsstummelelement mit möglichst wenigen Verfahrensschritte, bspw. Gießen und anschließend zerspanend nachbearbeiten, oder Walzen, hergestellt.

In der enfindungsgemäßen Ausführungsform ist ein Achsrohrelement vorgesehen, das an dem Lenkerelement festgelegt ist, um insbesondere die Stabilität des Fahrwerksystems zu erhöhen. Bevorzugt ist das Achsrohrelement, ein sich länglich längs einer Axialrichtung erstreckendes, rohrförmiges Bauteil, welches insbesondere bevorzugt zwei gegenüberliegende Lenkerelemente miteinander verbindet. Mit anderen Worten ist das Achsrohrelement bevorzugt die starre Achse im Fahrwerk eines Nutzfahrzeuges. Mit Vorteil ist das Achsrohrelement an einem distalen Ende in Axialrichtung am Lenkerelement festgelegt, wobei die Axialrichtung des Achsrohrelementes nicht zwingend koaxial zur Axialrichtung des Achsstummelelementes ausgerichtet sein muss. Bevorzugt ist es, dass das Achsrohrelement derart fest mit dem Lenkerelement verbunden ist, dass es Biegemomente, welche von den Rädern über das Achsstummelelement auf das Lenkerelement übertragen werden, aufnimmt und das Lenkerelement gegen Verdrehung quer zur Axialrichtung sichert. Alternativ bevorzugt kann es sein, dass das Achsrohrelement direkt am Achsstummelelement, bzw. dessen, den bevorzugten Aufnahmebereichen für Wälzlager abgewandten, distalen Ende festgelegt ist, wobei zur Festlegung des Achsrohrelementes am Achsstummelelement ein Reibschweißverfahren vorteilhaft eingesetzt werden kann.

In bevorzugter Weise ist das Achsrohrelement kraft- und/oder stoffschlüssig an dem Lenkerelement festgelegt. Um bei der Festlegung des Achsrohrelements am Lenkerelement Temperaturspannungen und Gefügeveränderungen sowohl im Lenkerelement als auch im Achsrohrelement zu vermeiden, ist es bevorzugt, das Achsrohrelement mittels einer kraftschlüssigen Verbindung am Lenkerelement festzulegen, welche durch das Aufbringen einer adhäsiven Schicht im Kontaktbereich zwischen beiden Elementen durch eine stoffschlüssige Verbindung unterstützt wird. Dieses bevorzugte Festlegungsverfahren des Achsrohrelementes am Lenkerelement ähnelt dem Verfahren, mit welchem das Achsstummelelement am Lenkerelement festgelegt ist, so dass deren Merkmale hier analog Anwendung finden. Das Lenkerelement weist hierfür bevorzugt eine zweite Aussparung auf, in welche ein erster Befestigungsbereich des Achsrohrelementes einführbar ist, wobei dieser erste Befestigungsbereich durch Aufweiten, beispielsweise mittels IHU, kraftschlüssig an der zweiten Aussparung des Lenkerelements festlegbar ist. Zu beachten ist hierbei lediglich, dass beim Einsatz des IHUs die Bereiche des Achsrohrelementes, welche nicht durch den im Inneren des Achsrohrelementes angelegten, beispielsweise durch ein Fluid erzeugten Druck aufgeweitet werden sollen, mit Hilfe von Formelementen gegen ein Aufblähen zu schützen sind. Die kraftschlüssige Verbindung zwischen Achsrohrelement und Lenkerelement kann insbesondere bevorzugt durch den Einsatz einer adhäsiven Schicht und eine durch diese gebildete stoffschlüssige Verbindung unterstützt werden. Alternativ bevorzugt kann das Achsrohrelement auch durch eine rein stoffschlüssige Verbindung, beispielsweise eine Rotationsreibschweißverbindung oder Schwingungsreibschweißverbindung am Lenkerelement festgelegt sein.

In besonders bevorzugter Weise ist das Achsstummelelement quer zu einer Haupterstreckungsachse des Achsrohrelements im Bezug auf das Achsrohrelement versetzt angeordnet, um bei bestehender Verbindung zwischen einem der beiden Elemente mit dem Lenkerelement das jeweils andere Element durch einen Umformvorgang kraftschlüssig am Lenkerelement festzulegen. Um das Achsstummelelement bzw. das Achsrohrelement unabhängig voneinander bzw. in aufeinanderfolgender Reihenfolge am Lenkerelement kraftschlüssig festlegen zu können, werden beide Elemente bevorzugt quer zur Axialrichtung bzw. zur Haupterstreckungsachse des Achsrohrelementes versetzt zueinander am Lenkerelement vorgesehen bzw. angeordnet. Besonders bevorzugt ist es, wenn das Achsstummelelement bzw. das Achsrohrelement mit dem jeweiligen ersten Befestigungsabschnitt in die Aussparung des Lenkerelementes eingeführt bzw. durch diese hindurch gesteckt wird und in der der Einsteckrichtung entgegen gerichteten Richtung beispielsweise ein Dorn eingeführt wird, welcher wiederum ein Aufweiten des jeweiligen ersten Befestigungsabschnittes erreicht. Mit Hilfe der bevorzugten versetzten Anordnung des Achsstummelelementes und des Achsrohrelementes am Lenkerelement können also beide Elemente in aufeinanderfolgender Reihenfolge in der erfindungsgemäß vorgesehenen Weise am Lenkerelement festgelegt werden. Insbesondere bevorzugt weisen das Achsrohrelement und das Achsstummelelement in ihren jeweiligen ersten Befestigungsabschnitten die gleichen geometrischen Eigenschaften auf, so dass nur eine Umform-Maschine bzw. nur ein Dorn, der zur Umformung mittels einer Presse in den jeweiligen Befestigungsabschnitt eingeführt wird, sowohl für die Festlegung des Achsstummelelements als auch für die Festlegung des Achsrohrelements am Lenkerelement verwendet werden kann. Es können auf diese Weise insbesondere Maschinen- und Werkzeugkosten eingespart werden.

Bevorzugt ist ein Trägerelement vorgesehen, welches am Achsrohrelement und/oder am Achsstummelelement und/oder am Lenkerelement festlegbar ist, um zusätzliche Fahrwerkselemente an dem Fahrwerksystem festzulegen. Das Trägerelement kann beispielsweise ein Bremsträger sein, an welchem eine Bremsscheibe, ein Bremszylinder und weitere Systeme der Radaufhängung eines Nutzfahrzeuges festlegbar sind. Bevorzugt kann es sein, dass das Trägerelement zur Aufnahme höherer Momente nicht nur an einem Element, also beispielsweise am Achsrohr- oder Achsstummelelement festgelegt ist, sondern über eine Vielzahl von Kontakt- bzw. Befestigungspunkten sowohl am Achsrohrelement als auch am Achsstummelelement oder am Lenkerelement festlegbar ist. Insbesondere bevorzugt ist das Trägerelement plattenförmig ausgelegt und weist eine Haupterstreckungsrichtung auf, welche im Wesentlichen quer zur Axialrichtung des Achsrohrelementes bzw. des Achsstummelelementes ausgerichtet ist.

In bevorzugter Weise weist das Trägerelement eine Aussparung auf, in welcher ein zweiter Befestigungsabschnitt des Achsrohrelements oder ein zweiter Befestigungsabschnitt des Achsstummelelements einpressbar ist, wobei zwischen der Aussparung des Trägerelements und dem jeweiligen zweiten Befestigungsabschnitt eine weitere adhäsive Schicht vorgesehen ist, um einen Stoffschluss zwischen dem Trägerelement und einem der Elemente Achsrohrelement oder Achsstummelelement zu bilden. Ähnlich der Festlegung des Achsstummelelementes am Lenkerelement kann es bevorzugt sein, dass das Trägerelement über eine kraftschlüssige und durch eine adhäsive Schicht verstärkte stoffschlüssige Verbindung an einem der Elemente Achsrohrelement oder Achsstummelelement festgelegt ist. Hierfür weisen das Achsrohrelement und/oder das Achsstummelelement einen zweiten Befestigungsabschnitt auf, welcher in einer Aussparung des Trägerelements eingeführt wird und anschließend mittels eines Umform-Verfahrens aufgeweitet wird. Analog zur zwischen Achsstummelelement und Lenkerelement vorgesehenen adhäsiven Schicht kann auch an dem zweiten Befestigungsabschnitt eine adhäsive Schicht aufgebracht sein, welche bei Aufweiten des zweiten Befestigungsabschnittes eine stoffschlüssige Verbindung zur Aussparung des Trägerelementes herstellt und wiederum das Eindringen von korrosionsfördernden Fremdstoffen verhindert. Besonders bevorzugt ist es, dass das Trägerelement am Achsstummelelement vorgesehen ist, wobei insbesondere bevorzugt der zweite Befestigungsabschnitt des Achsstummelelementes in Nähe der Lagerbereiche für das entsprechende Radlager des Achsstummelelementes angeordnet ist. Dies dient insbesondere dazu, die weiteren Systeme des Fahrwerksystems über das Trägerelement nahe dem Rad, welches drehbar am Achsstummelelement angeordnet ist, lagern zu können.

Insbesondere bevorzugt ist das Lenkerelement an einem ersten distalen Ende schwenkbar an dem Rahmen eines Nutzfahrzeuges festlegbar, wobei das Lenkerelement an einem zweiten, dem ersten Ende gegenüberliegenden, distalen Ende einen Aufnahmebereich aufweist, um ein Federelement zu lagern und Kräfte von dem Federelement an das Achsrohrelement und/oder das Achsstummelelement zu übertragen. Bevorzugt ist das Lenkerelement beispielsweise der Achslenker des Fahrwerksystems eines Nutzfahrzeuges, wobei dieser sich im Wesentlichen parallel zur Fahrzeuglängsrichtung erstreckt. An einem ersten distalen Ende ist das Lenkerelement bevorzugt über ein Lagerauge bzw. eine Lagerbuchse gegen Verlagerung relativ zum Fahrzeugrahmen gesichert und schwenkbar an einem beispielsweise Lagerbock festgelegt, wobei die Drehachse der Schwenkbewegung insbesondere bevorzugt quer zur Fahrzeuglängsrichtung und parallel zur Axialrichtung der Fahrzeugachse bzw. des Achsrohrelements ausgerichtet ist. An seinem, dem ersten Ende gegenüberliegenden, zweiten distalen Ende ist das Lenkerelement bevorzugt über einen Aufnahmebereich an einem Federelement, beispielsweise einer Spiralfeder oder einer Luftfeder, gelagert, wobei dieses Federelement im Wesentlichen dazu dient, die Schwenkbewegung des Lenkerelementes hin zu einer Ruhelage streben zu lassen. Bevorzugt zwischen dem ersten und dem zweiten distalen Ende bzw. zwischen dem ersten distalen Ende und dem Aufnahmebereich für das Federelement ist die Aussparung, welche mit dem Achsstummelelement in Eingriff steht, am Lenkerelement vorgesehen. Auf diese Weise ist es möglich, dass Vertikalbewegungen des Achsstummelelementes in Schwenkbewegung des Lenkerelementes gewandelt werden und die dabei erzeugten Vertikalbewegungen des Aufnahmebereiches des Federelementes am Lenkerelement in einer Verformung des Federelementes resultieren und auf diese Weise vom Federelement gedämpft bzw. in eine Ruhelage zurückgeführt werden. Insbesondere bevorzugt ist es, dass das Lenkerelement möglichst kurz bzw. möglichst kompakt gehalten wird, um sowohl benötigten Bauraum als auch Gewicht einzusparen, wobei in besonders bevorzugter Weise der Aufnahmebereich für das Federelement und die Aussparung, in welcher das Achsstummelelement eingreift, möglichst nah beieinander angeordnet sind. Zu beachten ist hierbei jedoch, dass bei einem sehr kurzen Lenkerelement bei einem Einfederungsvorgang des Federelementes die Schwenkbewegung des Lenkerelementes eine stark kreisförmig ausgebildete Bewegung des Aufnahmebereiches des Lenkerelementes zur Folge hat, wobei die Feder bzw. das Federelement nicht nur in vertikaler Richtung verformt wird, sondern auch in Fahrzeuglängsrichtung eine starke Verformung erfahren kann.

In insbesondere bevorzugter Weise ist die adhäsive Schicht mittels eines Polyurethans oder eines Epoxydharzes oder eines Silikons gebildet. Besonders bevorzugt ist hierbei die Verwendung eines Epoxydharzes, weil dieses besonders hohe Festigkeitswerte bei der Verbindung eines Metalls mit einem weiteren Metall erreicht.

In einer bevorzugten Ausführungsform ist das Achsstummelelement und/oder das Achsrohrelement derart umgeformt, dass zumindest eine Hinterschneidung gebildet ist, durch welche ein Formschluss zwischen dem ersten Befestigungsabschnitt und der Aussparung des Lenkerelements hergestellt ist. Bevorzugt kann es sein, dass bei der Umformung des Befestigungsbereichsabschnittes des Achsrohrelements nicht nur ein Kraftschluss mit der Aussparung des Lenkerelements gebildet ist, sondern der erste Befestigungsabschnitt des Achsstummelelements, bzw. des Achsrohrelements sowohl vor als auch hinter der Kontaktfläche mit der Aussparung des Lenkerelementes derart ausgebeult, gebördelt oder aufgeweitet ist, dass der Querschnitt des ersten Befestigungsabschnittes in diesen Bereichen einen größeren Durchmesser, bzw. eine größere Querschnittserstreckung aufweist als die Aussparung des Lenkerelementes. Auf diese Weise ist eine Hinterschneidung gebildet, welche einen Formschluss herstellt, der insbesondere Verlagerungen des Achsstummelements oder des Achsrohrelements längs der Axialrichtung relativ zum Lenkerelement verhindert. Besonders bei der Verwendung eines IHU kann auf diese Weise sehr leicht die Aufweitung des Achsstummelelements oder des Achsrohrelements in den Bereichen kurz vor und kurz nach dem Kontakt zum Lenkerelement derart zugelassen werden, dass ein leichtes Ausbeulen des Achsrohrelementes im ersten Befestigungsabschnitt stattfindet und auf diese Weise das Achsrohrelement formschlüssig am Lenkerelement festgelegt ist.

Mit Vorteil ist die adhäsive Schicht derart in dem Kontaktbereich der jeweils korrespondierenden Bauteile verteilt, dass ein Eindringen von Feuchtigkeit und Schadstoffen in den Kontaktbereich verhindert ist. Die adhäsive Schicht, welche bevorzugt bei der Festlegung des Achsstummelelements, des Achsrohrelements und des Trägerelements am Lenkerelement eingesetzt wird, soll bevorzugt auch ein Eindringen von Feuchtigkeit und Farbstoffen in den Kontaktbereich der jeweiligen Elemente bzw. Bauteile verhindern. Zu diesem Zweck ist es insbesondere bevorzugt, dass der Ringraum, welcher sich zwischen den jeweiligen ersten Befestigungsabschnitten und den jeweiligen dazu korrespondierenden Aussparungen bildet, an seinen Stirnflächen bevorzugt durch die adhäsive Schicht abgedichtet ist.

Erfindungsgemäß ist ein Fahrwerksystem für Nutzfahrzeuge vorgesehen, welches ein Achsstummelelement und ein Lenkerelement umfasst, wobei das Lenkerelement eine Aussparung und das Achsstummelelement einen ersten Befestigungsabschnitt aufweist, wobei in einem ersten Zustand der erste Befestigungsabschnitt des Achsstummelelements mit einer adhäsiven Schicht versehen in die Aussparung des Lenkerelements einführbar ist, wobei in einem zweiten Zustand der erste Befestigungsabschnitt derart umgeformt ist, dass ein Kraftschluss zwischen dem ersten Befestigungsabschnitt und der Aussparung vorliegt, wobei im zweiten Zustand mittels einer adhäsiven Schicht ein Stoffschluss zwischen dem ersten Befestigungsabschnitt und der Aussparung gebildet ist. Der erste Zustand ist bevorzugt der Zustand vor dem Verbinden des Achsstummelements am Lenkerelement. Im ersten Zustand weist das Achsstummelelement einen ersten Befestigungsabschnitt auf, der derart geformt ist, dass er in die Aussparung am Lenkerelement einführbar ist.

Erfindungsgemäß ist ein Verfahren zur Herstellung eines Fahrwerksystems für Nutzfahrzeuge vorgesehen, umfassend die Schritte Bereitstellen eines Achsstummelelementes und eines Lenkerelements, wobei das Achsstummelelement einen ersten Befestigungsabschnitt aufweist und wobei das Lenkerelement eine Aussparung aufweist, in die der erste Befestigungsabschnitt einführbar ist; Aufbringen einer adhäsiven Schicht auf den ersten Befestigungsabschnitt des Achsstummelelements; Einführen des ersten Befestigungsabschnitts in die Aussparung des Lenkerelementes; Umformen, insbesondere Aufweiten, des ersten Befestigungsabschnittes, um einen Kraftschluss zwischen dem ersten Befestigungsabschnitt und der Aussparung und einen Stoffschluss zwischen dem ersten Befestigungsabschnitt der adhäsiven Schicht und der Aussparung des Lenkerelements herzustellen. Das erfindungsgemäße Verfahren zur Herstellung eines Fahrwerksystems zeichnet sich dadurch aus, dass eine kraft- bzw. stoffschlüssige Verbindung zwischen dem Achsstummelelement und dem Lenkerelement hergestellt wird, wobei insbesondere bevorzugt die Nachteile einer rein stoffschlüssigen Verbindung, welche beispielsweise durch ein Schweißverfahren hergestellt wird, vermieden werden. Solche Nachteile können sein, dass während des Schweißvorganges und den dafür benötigten hohen Temperaturen Störungen im Gefüge der jeweiligen Herstellungsmaterialien des Lenkerelements und des Achsstummelelements auftreten können und dass bei Abkühlen nach dem Schweißvorgang erhebliche Thermospannungen in den gefügten Bauteilen die Festigkeit und damit die Betriebssicherheit des Fahrwerksystems erheblich verschlechtern können. Es ist bevorzugt, dass der erste Befestigungsabschnitt des Achsstummelelements derart ausgelegt ist, dass er ohne Weiteres in die Aussparung des Lenkerelements einführbar ist, insbesondere bevorzugt korrespondiert die Außengeometrie des ersten Befestigungsabschnitts zumindest bereichsweise mit der Innengeometrie der Aussparung am Lenkerelement. Nachdem der erfindungsgemäß mit einer adhäsiven Schicht versehene erste Befestigungsabschnitt in die Aussparung des Lenkerelements eingeschoben wurde, ist es bevorzugt, dass das Achsstummelelement in einer gewünschten Lage zum Lenkerelement ausgerichtet wird. Insbesondere bevorzugt ist dies, wenn am Achsstummelelement bereits weitere nicht rotationssymmetrische Teile vorgesehen sind, wie beispielsweise ein Trägerelement, an welchem Bremsen oder ähnliche Sekundärsysteme des Fahrwerksystems festlegbar sind. Nach der bevorzugten genauen Ausrichtung des Achsstummelelementes relativ zum Lenkerelement wird der erste Befestigungsabschnitt des Achsstummelelementes umgeformt, insbesondere bevorzugt aufgeweitet, um einen Kraftschluss zwischen der Außenkontur des Befestigungsabschnittes und der Innenkontur der Aussparung des Lenkerelements herzustellen. Dabei wird während des Umform-Vorganges bevorzugt die Außenfläche des Befestigungsabschnittes gegen die Innenfläche der Aussparung des Lenkerelements verlagert und auf diese aufgepresst, wobei die zwischen den beiden Flächen befindliche adhäsive Schicht möglichst gleichmäßig zwischen den beiden, sich aufeinander zu bewegenden Flächen verteilt, und bei möglichst geringer Spaltdicke zwischen beiden Flächen eine maximale Klebwirkung erreicht. In der Praxis wird es bevorzugt sein, dass die Stellen, an welchen die korrespondierenden Flächen des Achsstummelelementes und des Lenkerelementes aufeinandertreffen, die beiden Elemente kraftschlüssig miteinander verbinden, wobei die durch Oberflächenunebenheiten entstehenden Hohlräume zwischen den ersten Befestigungsabschnitten und den jeweils korrespondierenden Aussparungen des Lenkerelements, die adhäsive Schicht einen Stoffschluss zwischen den jeweiligen korrespondierenden Elementen herstellt.

In bevorzugter Weise ist ein Achsrohrelement vorgesehen, das mit einem ersten Befestigungsabschnitt in einer Aussparung des Lenkerelements angeordnet und derart umgeformt wird, dass eine kraftschlüssige Verbindung zwischen dem ersten Befestigungsabschnitt des Achsrohrelements und dem Lenkerelement entsteht, wobei über eine adhäsive Schicht ein Stoffschluss zwischen dem ersten Befestigungsabschnitt und dem Lenkerelement hergestellt wird.

Bevorzugt ist das Lenkerelement ein Gussteil und weist eine Geometrie auf, die insbesondere dafür geeignet ist, einen günstigen Kraftfluss von der Aufnahmestelle des Achsstummelelementes hin zum Aufnahmebereich für das Federelement oder hin zur Aussparung, in welcher das Achsrohrelement eingreift, zu gewährleistet. Insbesondere bevorzugt kann es sein, dass das Lenkerelement aus einer Aluminiumlegierung hergestellt ist. Die erfindungsgemäße Klebverbindung von Achsstummelelement und dem aus Aluminium hergestellten Lenkerelement erweist sich dabei besonders vorteilhaft, da im Allgemeinen bevorzugt ist, für das Achsstummelelement einen Stahl zu verwenden, wobei die bei einer Metall-MetallVerbindung von Stahl mit Aluminium auftretende Kontaktkorrosion und ähnliche intermetallurgische Verschleißvorgänge durch die adhäsive Schicht verhindert werden können. Der Einsatz der adhäsiven Schicht ermöglicht bevorzugt, die beiden Metallflächen voneinander zu trennen, um die sogenannte galvanische Korrosion zu verhindern. Diese Korrosion bzw. dieser Korrosionsvorgang entsteht insbesondere dann, wenn unterschiedliche Metalle miteinander in Kontakt gebracht werden, wobei aufgrund der unterschiedlichen elektrischen Potenziale das jeweils unedlere Metall korrodiert.

Weitere Vorteile und Merkmale der Erfindung ergerben sich aus der nachfolgenden Beschreibung bevorzugter Ausführungsformen des Fahrwerksystemes mit Bezug auf die beigefügten Figuren. Einzelne Merkmale der verschiedenen Ausführungsformen können dabei im Rahmen der Erfindung miteinander kombiniert werden. Es zeigen:
- Fig. 1: Eine Seitenansicht einer bevorzugten Ausführungsform des erfindungsgemäßen Fahrwerksystems,
- Fig. 2: eine Draufsicht der in Fig. 1 gezeigten bevorzugten Ausführungsform des erfindungsgemäßen Fahrwerksystems,
- Fig. 3: eine Seitenansicht einer weiteren bevorzugten Ausführungsform eines nicht-erfindungsgemäßen Fahrwerksystems,
- Fig. 4: eine Draufsicht der in Fig. 3 gezeigten bevorzugten Ausführungsform des nicht-erfindungsgemäßen Fahrwerksystems,
- Fig. 5: eine Ansicht einer bevorzugten Ausführungsform des erfindungsgemäßen Fahrwerkssystems, und
- Fig. 6: eine Schnittansicht einer bevorzugten Ausführungsform des nicht-erfindungs-gemäßen Fahrwerkssystems.

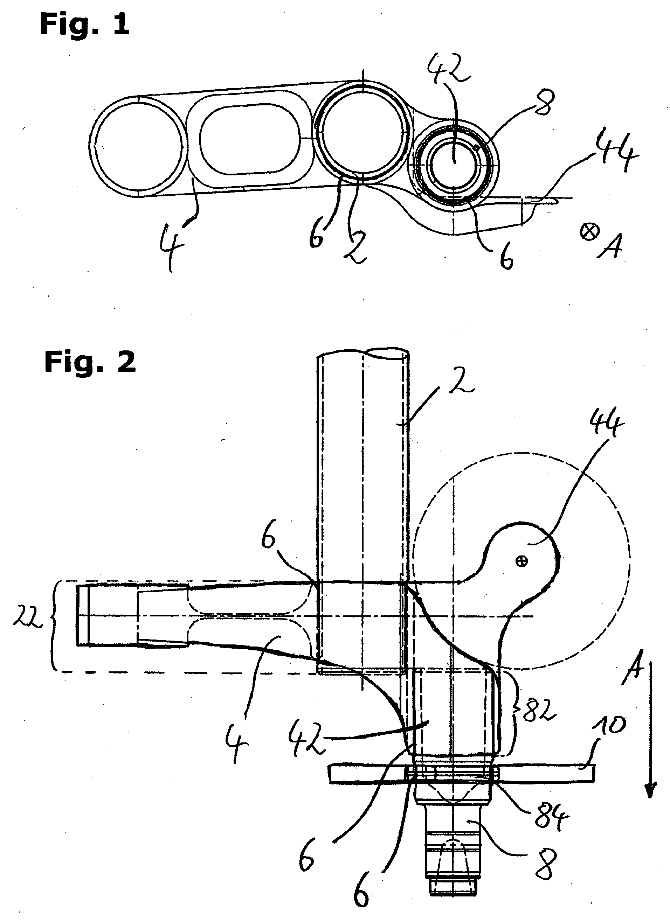

In Fig. 1 ist eine bevorzugte Ausführungsform des erfindungsgemäßen Fahrwerksystems gezeigt, welches die Komponenten Lenkerelement 4, Achsstummelelement 8 und Achsrohrelement 2 umfasst. Das Lenkerelement 4 weist eine Vielzahl von Aussparungen, bevorzugt kreisförmigen Bohrungen auf, die bevorzugt parallel zu einer Axialrichtung A in das Lenkerelement 4 eingebracht sind. Die Axialrichtung A ist dabei die Beobachtungsrichtung des Betrachters der Figur. Das Lenkerelement 4 weist weiterhin eine längliche Form auf, wobei an einem ersten distalen Ende (in der Figur links gezeigt) eine Aussparung vorgesehen ist, mit welcher das Lenkerelement 4 schwenkbar am Fahrzeugrahmen des Nutzfahrzeuges festlegbar ist und wobei an dem - dem ersten distalen Ende gegenüberliegenden - zweiten distalen Ende ein Aufnahmebereich 44 vorgesehen ist, an welchem beispielsweise eine Luftfeder lagerbar ist, welche das zweite distale Ende (in der Figur rechts gezeigt) in vertikaler Richtung gegen Verlagerung relativ zum Fahrzeugrahmen des Nutzfahrzeuges abstützt. Es ist bevorzugt, dass die Aussparung bzw. der Aufnahmebereich am ersten distalen Ende des Lenkerelements 4 kreisförmig ausgelegt ist, insbesondere, um eine Lagerbuchse aufzunehmen und um die Schwenkbarkeit des Lenkerelements 4 um eine parallel zur Axialrichtung A verlaufende Achse zu ermöglichen. Benachbart zum Aufnahmebereich 44 weist das Lenkerelement 4 bevorzugt eine Aussparung 42 auf, in der erfindungsgemäß ein Achsstummelelement 8 festlegbar ist. Das Achsstummelelement 8 ist insbesondere bevorzugt aus einem anderen Material hergestellt als das Lenkerelement 4. In vorteilhafter Weise ist zwischen dem Achsstummelelement 8 und dem Lenkerelement 4 eine adhäsive Schicht 6 angeordnet, die bevorzugt zum einen die intermetallische Korrosion verhindert und zum anderen mittels eines Stoffschlusses mit den jeweiligen Kontaktflächen der beiden Elemente die Festlegung des Achsstummelelements 8 am Lenkerelement 4 verstärkt. Das Achsstummelelement 8 weist bevorzugt kreisförmige, bzw. zylinderförmige Flächen auf, an welchen insbesondere bevorzugt ein Wälzlager eines Radlagers zum Eingriff gebracht werden kann. Dies dient insbesondere dazu, ein Rad eines Nutzfahrzeuges an dem Achsstummelelement 8 drehbar bzw. rotierend zu lagern. Das Lenkerelement 4 weist bevorzugt eine zweite Aussparung auf (in der Figur links neben der Aussparung 42 dargestellt), in welcher ein Achsrohrelement 2 zum Eingriff bringbar ist, wobei wiederum eine adhäsive Schicht 6 zwischen den Kontaktflächen des Lenkerelements 4 und des Achsrohrelements 2 angeordnet ist, die einen Stoffschluss herstellt. Insbesondere bevorzugt ist es, dass sowohl das Achsrohrelement 2 als auch das Achsstummelelement 8 nach dem jeweiligen Einführen in die entsprechende Aussparung am Lenkerelement 4 derart umgeformt werden, dass ein Kraftschluss zwischen dem jeweiligen Element, Achsrohrelement 2 oder Achsstummelelement 8, und dem Lenkerelement 4 entsteht. Insbesondere bevorzugt ist es, die entsprechenden Bereiche des Achsrohrelements 2, bzw. des Achsstummelelements 8 aufzuweiten, um diese gegen die nach innen weisende Wand der Aussparung am Lenkerelement 4 zu pressen. Insbesondere im Vergleich zu einem Reibschweißverfahren, bei dem besonders bevorzugt rotierende Bauteile gegen jeweils an ihnen festzulegende Bauteile gepresst werden, und bei Erreichen einer bestimmten Temperatur eine Anschmelzung des Materials beider Bauteile stattfindet, lassen sich die entsprechenden Bauteile bei dem erfindungsgemäßen Verfahren genauer zueinander positionieren, da kein Rotationsvorgang notwendig ist, um die entsprechende Wärme bzw. die entsprechende verbindende Kraft herzustellen. Um Gewicht einzusparen, ist es insbesondere bevorzugt, dass das Lenkerelement 4 weitere Aussparungen bzw. Materialverdünnungen aufweist, so dass für das Lenkerelement 4 insgesamt eine Geometrie entsteht, die einen günstigen Kraftfluss ermöglicht, und gleichzeitig die Materialparameter, wie beispielsweise die Streckgrenze oder die Bruchfestigkeit des Herstellungsmaterials des Lenkerelements 4 möglichst vollständig ausnutzt, wodurch eine Überdimensionierung bzw. ein zu hohes Gewicht des Lenkerelements 4 vermieden wird.

Fig. 2 zeigt eine Draufsicht einer bevorzugten Ausführungsform des erfindungsgemäßen Fahrwerksystems, welche größtenteils der in Fig. 1 gezeigten bevorzugten Ausführungsform des erfindungsgemäßen Fahrwerksystems gleicht. Ein Unterschied besteht darin, dass an dem Achsstummelelement 8 ein Trägerelement 10 festgelegt ist, um weitere Systeme bzw. Komponenten an dem Fahrwerksystem festzulegen. Bevorzugt ist es, dass das Achsrohrelement 2 und das Achsstummelelement 8 eine jeweils parallel zur Axialrichtung A verlaufende Haupterstreckungsrichtung aufweisen, wobei sie insbesondere bevorzugt im Wesentlichen rotationssymmetrisch um ihre jeweilige Haupterstreckungsrichtung ausgelegt sind. Insbesondere bevorzugt ist es, dass das Achsstummelelement 8 und das Achsrohrelement 2 quer zur Axialrichtung A versetzt zueinander am Lenkerelement 4 festgelegt, um zu ermöglichen, während des Fertigungsvorganges zunächst das Achsrohrelement 2 in die Aussparung am Lenkerelement 4 einzuschieben, den Befestigungsabschnitt 22 aufzuweiten und anschließend das Achsstummelelement 8 von - in der Figur - unten in die Aussparung 42 am Lenkerelement 4 einzuführen, und den Befestigungsabschnitt 82 des Achsstummelelements 8 aufzuweiten und auf diese Weise das Achsstummelelement 8 am Lenkerelement 4 kraftschlüssig festzulegen. Diese Herstellungsreihenfolge wäre nicht möglich, wenn das Achsrohrelement 2 und das Achsstummelelement 8 koaxial zueinander ausgerichtet sind, wobei die jeweilige offene Seite der beiden bevorzugt rohrförmig ausgelegten Elemente, Achsrohrelement 2 und Achsstummelelement 8, durch das jeweils gegenüberliegende Element verdeckt wäre. Insbesondere bevorzugt ist es, dass das Trägerelement 10 bereits vor der Festlegung des Achsstummelelements 8 am Lenkerelement 4 an dem zweiten Befestigungsabschnitt 84 des Achsstummelelements 8 festgelegt ist. Bevorzugt ist an den Befestigungsabschnitten 82 und 84 des Achsstummelelements 8 und dem Befestigungsabschnitt 22 des Achsrohrelements 2 eine adhäsive Schicht 6 vorgesehen, welche die kraftschlüssige Verbindung der jeweiligen Elemente 2 und/oder 8 mit dem Lenkerelement 4, bzw. dem Trägerelement 10 durch einen Stoffschluss unterstützt und verstärkt. Weiterhin ist es durch den Einsatz der adhäsiven Schicht 6 möglich, verschiedene Herstellungsmaterialien für das Achsrohrelement 2, das Achsstummelelement 8, das Lenkerelement 4 und das Trägerelement 10 zu verwenden, ohne eine erhöhte Gefahr einer intermetallischen bzw. galvanischen Korrosion in Kauf nehmen zu müssen. Deutlich dargestellt ist in Fig. 2 die kompakte Auslegung des Lenkerelements 4, bei welcher der Aufnahmebereich 44 für eine gestrichelt angedeutete Luftfeder derart ausgelegt ist, dass die Luftfeder von oben her gesehen die Haupterstreckungsachse des Achsstummelelements 8 schneidet. Das Lenkerelement 4 ermöglicht durch die, auf günstigen Kraftfluss, bzw. Spannungsverlauf optimierte Geometrie, die Aufnahme hoher Biegemomente bei gleichzeitig kompakter Bauweise. Die Anordnung der Aufnahme 44 für eine Luftfeder oder ein ähnliches Federelement kann möglichst nah am Achsrohrelement 2 und gleichzeitig am Achsstummelelement 8 erfolgen, wodurch nicht nur die Länge in Fahrzeuglängsrichtung, sondern auch das Gewicht des Lenkerelements 4 reduziert werden kann. Weiterhin kann eine bevorzugt flache Auslegung des Fahrwerks des Nutzfahrzeuges erreicht werden, in dem der Angriffspunkt der Luftfeder an dem Aufnahmebereich 44 in vertikaler Richtung unterhalb der Haupterstreckungsachse des Achsstummelements 8 angeordnet ist. In aus dem Stand der Technik bekannten Auslegungsformen eines Fahrwerksystems wird die Luftfeder bzw. der Aufnahmebereich 44 für eine Luftfeder oft oberhalb des Achsrohrelements 2 bzw. des Achsstummelelements 8 angeordnet, was die Bauhöhe des Fahrwerkes erheblich vergrößert und somit bezogen auf das gesamte Nutzfahrzeug aufgrund der Maximalhöhenbegrenzung von Nutzfahrzeugen in einem reduzierten Stauraum resultiert. Weiterhin wird durch die insgesamt kompakte Bauweise des Lenkerelements 4 Gewicht im Vergleich zu herkömmlichen Lenkerelementen eingespart und es können die Treibstoffkosten gesenkt und die maximal vom Nutzfahrzeug transportierbare Nutzlast erhöht werden.

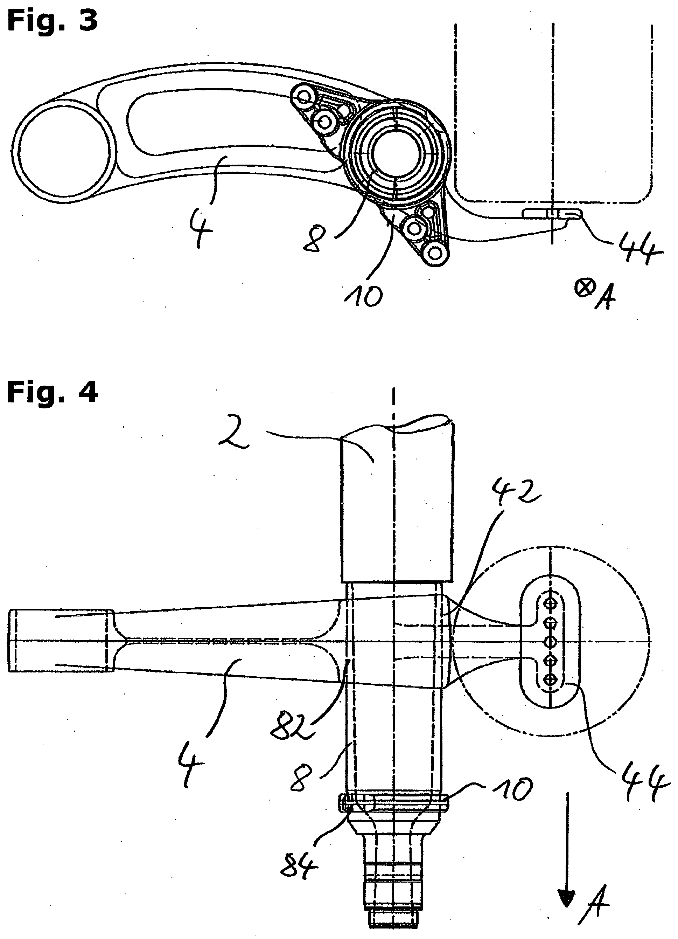

Fig. 3 zeigt eine weitere bevorzugte Ausführungsform eines nicht-erfindungsgemäßen Fahrwerksystems, wobei insbesondere das Trägerelement 10 deutlich dargestellt ist. Besonders bevorzugt ist das Trägerelement 10 ein Bremsträger, an welchem die relativ zum Nutzfahrzeug feststehenden Komponenten des Bremssystems eines Nutzfahrzeuges festgelegt sind, beispielsweise die Bremsscheibe oder die Bremsbacken einer Trommelbremse. Weiterhin ist in der Figur gezeigt, dass der Aufnahmebereich 44 des Lenkerelements 4 deutlich unterhalb der Haupterstreckungsachse des Achsstummelelements 8 angeordnet ist und auf diese Weise die Bauhöhe des Fahrwerksystems deutlich reduziert werden kann. Mit der ZweiPunkt-Strichlinie ist ein an dem Aufnahmebereich 44 gelagertes Federelement angedeutet, wobei es bei einer vorgegebenen vertikalen Erstreckung dieses Federelements insbesondere vorteilhaft ist, das Federelement möglichst tief, also in der Figur möglichst weit unten am Lenkerelement 4 festzulegen.

In Fig. 4 ist eine Draufsicht einer bevorzugten Ausführungsform des nicht-erfindungsgemäßen Fahrwerksystems gezeigt. Dabei weist das Achsstummelelement 8 bevorzugt einen ersten Befestigungsbereich 82 und einen zweiten Befestigungsabschnitt 84 auf, um kraft- und stoffschlüssig mit dem Lenkerelement 4 als auch mit dem Trägerelement 10 verbunden zu werden. Als Alternative zu den bisher beschriebenen bevorzugten Ausführungsformen ist das Achsrohrelement 2 koaxial zum Achsstummelelement 8 ausgerichtet und insbesondere bevorzugt mittels eines Reibschweißverfahrens an dem in der Figur oben gezeigten Ende des Achsstummelelements 8 festgelegt. Es könnte alternativ dazu auch bevorzugt sein, das Achsrohrelement 2 nach Festlegung des Achsstummelelements 8 am Lenkerelement 4 zumindest bereichsweise in das in der Figur oben gezeigte Ende des Achsstummelelements 8 einzuführen und wiederum eine adhäsive Schicht 6 vorzusehen und das Achsrohrelement 2 durch ein Innenhochdruck-Umformverfahren zumindest in dem Bereich, in welchem es mit dem Achsstummelelement 8 überlappt, aufzuweiten und es auf diese Weise kraftschlüssig an dem Achsstummelelement 8 festzulegen.

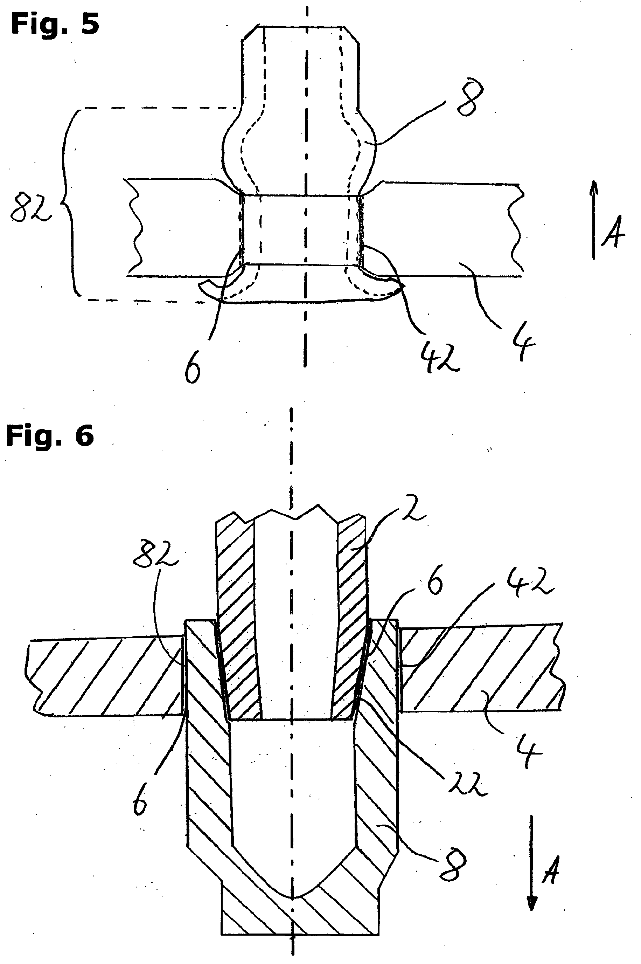

In **Fig. 5** ist eine Detailansicht einer bevorzugten Festlegungsvariante des Achsstummelelements 8 am Lenkerelement 4 gezeigt. Dabei ist neben der kraftschlüssigen Festlegung, unterstützt durch einen Stoffschluss über der adhäsive Schicht 6, auch ein Formschluss zwischen Achsstummelelement 8 und Lenkerelement 4 vorgesehen. Dieser Formschluss wird insbesondere bevorzugt dadurch erreicht, dass das Achsstummelelement 8 einen ersten Befestigungsabschnitt 82 aufweist, der eine größere Erstreckung längs der Axialrichtung A aufweist als das Lenkerelement 4 im Bereich der Aussparung 42. Im ersten Befestigungsabschnitt 82 ist das Achsstummelement 8 derart aufgeweitet, dass zum einen ein Kraftschluss zwischen dem in der Aussparung eingeführten Bereich entsteht und zum anderen das Achsstummelelement 8 bevorzugt vor und/oder hinter dem Lenkerelement 4 eine Hinterschneidung mit der Aussparung 42 bildet. Es wird auf diese Weise mit Vorteil eine Verlagerung des Achsstummelelements 8 relativ zum Lenkerelement 4 längs der Axialrichtung A verhindert. Bevorzugt kann das Achsstummelelement 8 an einem Ende eine Bördelung aufweise, welche beispielsweise mittels eines Dorns geformt sein kann.

Fig. 6 zeigt eine Schnittansicht einer weiteren bevorzugten Ausführungsform eines nicht-erfindungsgemäßen Fahrwerkssystems. Das Achsstummelelement 8 und das Achsrohrelement 2 sind bevorzugt koaxial zu einander ausgerichtet, wobei der Befestigungsabschnitt 22 des Achsrohrelements 2 in das bevorzugt offene Ende des Achsstummelelements 8 einführbar ist, wobei mittels einer bevorzugt konischen, bzw. kegeligen Form des ersten Befestigungsabschnittes 22 eine kraftschlüssige Verbindung mit dem Achsstummelelement 8 herstellbar ist. Dabei ist es bevorzugt, dass bei Einführen des ersten Befestigungsabschnitts 22 des Achsrohrelements 2 der erste Befestigungsabschnitt 82 des Achsstummelements 8 aufgeweitet wird und seinerseits eine kraftschlüssige Verbindung mit der Aussparung 42 des Lenkerelements 4 eingeht. In bevorzugter Weise werden die kraftschlüssigen Verbindungen zwischen Achsstummelelement 8 und Lenkerelement 4 und Achsrohrelement 2 und Achsstummelement 8 durch jeweils an den Kontaktflächen vorgesehene adhäsive Schichten 6 stoffschlüssig verstärkt.

### Bezugszeichenliste:

2 - Achsrohrelement
4 - Lenkerelement
6 - adhäsive Schicht
8 - Achsstummelelement
10 - Trägerelement
22 - erster Befestigungsabschnitt des Achsrohrelements
42 - Aussparung des Lenkerelements
44 - Aufnahmebereich
82 - erster Befestigungsabschnitt des Achsstummelelements
84 ₋ zweiter Befestigungsabschnitt des Achsstummelelements
A - Axialrichtung

## Patentansprüche

1. Fahrwerkssystem für Nutzfahrzeuge, umfassend ein Achsstummelelement (8) und ein Lenkerelement (4),
wobei das Lenkerelement (4) eine Aussparung (42) und das Achsstummelelement (8) einen ersten Befestigungsabschnitt (82) aufweist,
wobei der erste Befestigungsabschnitt (82) in der Aussparung (42) des Lenkerelements (4) angeordnet ist und aufgrund eines Umformvorganges kraftschlüssig an der Aussparung (42) festgelegt ist, und
wobei zwischen dem ersten Befestigungsabschnitt (82) und der Aussparung (42) eine adhäsive Schicht (6) vorgesehen ist, über die ein Stoffschluss zwischen dem ersten Befestigungsabschnitt (82) des Achsstummelelements (8) und der Aussparung (42) des Lenkerelements (4) gebildet ist, wobei ein Achsrohrelement (2) vorgesehen ist, das an dem Lenkerelement (4) festgelegt ist, um insbesondere die Stabilität des Fahrwerkssystems zu erhöhen.

2. Fahrwerkssystem nach Anspruch 1,
wobei das Achsstummelelement (8) einstückig ausgeführt ist.

3. Fahrwerkssystem nach Anspruch 1 oder 2,
wobei das Achsrohrelement (2) kraft- und/oder stoffschlüssig an dem Lenkerelement (4) festgelegt ist.

4. Fahrwerkssystem nach einem der vorhergehenden Ansprüche,
wobei das Achsstummelelement (8) quer zu einer Haupterstreckungsachse des Achsrohrelements (2) in Bezug auf das Achsrohrelement (2) versetzt angeordnet ist, um bei bestehender Verbindung zwischen einem der beiden Elemente (2 oder 8) mit dem Lenkerelement (4), das jeweils andere durch einen Umformvorgang kraftschlüssig an dem Lenkerelement (4) festzulegen.

5. Fahrwerkssystem nach einem der vorhergehenden Ansprüche,
wobei ein Trägerelement (10) vorgesehen ist, welches am Achsrohrelement (2) und/oder am Achsstummelelement (8) und/oder am Lenkerelement (4) festlegbar ist, um zusätzliche Fahrwerkselemente an dem Fahrwerkssystem festzulegen.

6. Fahrwerkssystem nach Anspruch 5,
wobei das Trägerelement (10) eine Aussparung aufweist, in welcher ein zweiter Befestigungsabschnitt des Achsrohrelements (2) oder ein zweiter Befestigungsabschnitt (84) des Achsstummelelements (8) einpressbar ist, wobei zwischen der Aussparung des Trägerelements (10) und dem jeweiligen zweiten Befestigungsabschnitt (84) eine weitere adhäsive Schicht (6) vorgesehen ist, um einen Stoffschluss zwischen dem Trägerelement (10) und einem der Elemente Achsrohrelement (2) oder Achsstummelelement (8) zu bilden.

7. Fahrwerkssystem nach einem der vorhergehenden Ansprüche,
wobei das Lenkerelement (4) an einem ersten distalen Ende schwenkbar an dem Rahmen eines Nutzfahrzeuges festlegbar ist, und
wobei das Lenkerelement (4) an einem zweiten, dem ersten Ende gegenüber liegenden, distalen Ende einen Aufnahmebereich (44) aufweist, um ein Federelement zu lagern und Kräfte von dem Federelement an das Achsrohrelement (2) und/oder das Achsstummelelement (8) zu übertragen.

8. Fahrwerkssystem nach einem der vorhergehenden Ansprüche,
wobei die adhäsive Schicht (6) mittels eines Polyurethans oder eines Epoxydharzes oder eines Silikons gebildet ist.

9. Fahrwerkssystem nach einem der vorhergehenden Ansprüche,
wobei das Achsstummelelement (8) und/oder das Achsrohrelement (2) derart umgeformt ist, dass zumindest eine Hinterschneidung gebildet ist, durch welche ein Formschluss zwischen dem ersten Befestigungsabschnitt (82, 22) und der Aussparung (42) des Lenkerelements (4) hergestellt ist.

10. Fahrwerkssystem nach einem der vorhergehenden Ansprüche,
wobei die adhäsive Schicht (6) derart in dem Kontaktbereich den jeweils korrespondierenden Bauteilen verteilt ist, dass ein Eindringen von Feuchtigkeit und Schadstoffen in den Kontaktbereich verhindert ist.

11. Fahrwerkssystem nach einem der vorhergehenden Ansprüche,
wobei das Lenkerelement (4) ein Gussteil ist, und
wobei das Lenkerelement (4) eine Geometrie aufweist, die dafür geeignet ist, einen günstigen Kraftfluss vom Achsstummelement (8) hin zu einem Aufnahmebereich (44) für ein Federelement oder hin zur Aussparung (42) zu gewährleisten.

12. Fahrwerkssystem für Nutzfahrzeuge umfassend ein Achsstummelelement (8) und ein Lenkerelement (4),
wobei das Lenkerelement (4) eine Aussparung (42) und das Achsstummelelement (8) einen ersten Befestigungsabschnitt (82) aufweist,
wobei in einem ersten Zustand der erste Befestigungsabschnitt (82) des Achsstummelelements (8) mit einer adhäsiven Schicht (6) versehen in die Aussparung (42) des Lenkerelements (4) einführbar ist,
wobei in einem zweiten Zustand der erste Befestigungsabschnitt (82) derart umgeformt ist, dass ein Kraftschluss zwischen dem ersten Befestigungsabschnitt (82) und der Aussparung (42) vorliegt,
wobei im zweiten Zustand mittels der adhäsiven Schicht (6) ein Stoffschluss zwischen dem ersten Befestigungsabschnitt (82) und der Aussparung (42) gebildet ist,
wobei ein Achsrohrelement (2) vorgesehen ist, das an dem Lenkerelement (4) festgelegt ist, um insbesondere die Stabilität des Fahrwerkssystems zu erhöhen.

13. Verfahren zur Herstellung eines Fahrwerkssystems für Nutzfahrzeuge, umfassend die Schritte:
a) Bereitstellen eines Achsstummelelements (8) und eines Lenkerelements (4),
wobei das Achsstummelelement (8) einen ersten Befestigungsabschnitt (82) aufweist, und
wobei das Lenkerelement (4) eine Aussparung (42) aufweist, in die der erste Befestigungsabschnitt (82) einführbar ist,
b) Aufbringen einer adhäsiven Schicht (6) auf den ersten Befestigungsabschnitt (82) des Achsstummelelements (8),
c) Einführen des ersten Befestigungsabschnitts (82) in die Aussparung (42) des Lenkerelements (4),
d) Umformen, insbesondere Aufweiten, des ersten Befestigungsabschnitts (82), um einen Kraftschluss zwischen dem ersten Befestigungsabschnitt (82) und der Aussparung (42) und einen Stoffschluss zwischen dem ersten Befestigungsabschnitt (82), der adhäsiven Schicht (6) und der Aussparung (42) des Lenkerelements (4) herzustellen, und
e) Festlegen eines Achsrohrelements (2) über einen ersten Befestigungsabschnitt (22) in einer Aussparung des Lenkerelements (4).

14. Verfahren nach Anspruch 13,
wobei das Achsrohrelement (2) über seinem ersten Befestigungsabschnitt (22) in der Aussparung des Lenkerelements (4) angeordnet und derart umgeformt wird, dass eine kraftschlüssige Verbindung zwischen dem ersten Befestigungsabschnitt (22) des Achsrohrelements (2) und dem Lenkerelement (4) entsteht,
wobei über eine adhäsive Schicht (6) ein Stoffschluss zwischen dem ersten Befestigungsabschnitt (82) und dem Lenkerelement (4) hergestellt wird.

## Claims

1. Chassis system for utility vehicles, comprising an axle stub element (8) and a link element (4),
wherein the link element (4) has a recess (42) and the axle stub element (8) has a first fastening portion (82),
wherein the first fastening portion (82) is arranged in the recess (42) of the link element (4) and is fixed in non-positively locking fashion to the recess (42) by way of a deformation process, and
wherein, between the first fastening portion (82) and the recess (42), there is provided an adhesive layer (6), by means of which a cohesive connection is formed between the first fastening portion (82) of the axle stub element (8) and the recess (42) of the link element (4), wherein an axle tube element (2) is provided which is fixed to the link element (4) in order, in particular, to increase the stability of the chassis system.

2. Chassis system according to Claim 1,
wherein the axle stub element (8) is of unipartite form.

3. Chassis system according to Claim 1 or 2,
wherein the axle tube element (2) is fixed in non-positively locking and/or cohesive fashion to the link element (4).

4. Chassis system according to one of the preceding claims,
wherein the axle stub element (8) is arranged so as to be offset relative to the axle tube element (2) transversely with respect to a main axis of extent of the axle tube element (2), for the purposes, when a connection exists between one of the two elements (2 or 8) and the link element (4), of fixing the respective other element in non-positively locking fashion to the link element (4) by way of a deformation process.

5. Chassis system according to one of the preceding claims,
wherein a carrier element (10) is provided which can be fixed to the axle tube element (2) and/or to the axle stub element (8) and/or to the link element (4) for the purposes of fixing additional chassis elements to the chassis system.

6. Chassis system according to Claim 5,
wherein the carrier element (10) has a recess into which a second fastening portion of the axle tube element (2) or a second fastening portion (84) of the axle stub element (8) can be pressed, wherein, between the recess of the carrier element (10) and the respective second fastening portion (84), there is provided a further adhesive layer (6) for forming a cohesive connection between the carrier element (10) and one of the elements axle tube element (2) or axle stub element (8).

7. Chassis system according to one of the preceding claims,
wherein the link element (4) can be pivotably fixed, at a first distal end, to the frame of a utility vehicle, and
wherein the link element (4) has, at a second distal end situated opposite the first end, a receiving region (44) for the mounting of a spring element and for the transmission of forces from the spring element to the axle tube element (2) and/or to the axle stub element (8).

8. Chassis system according to one of the preceding claims,
wherein the adhesive layer (6) is formed by means of a polyurethane or an epoxy resin or a silicone.

9. Chassis system according to one of the preceding claims,
wherein the axle stub element (8) and/or the axle tube element (2) is deformed such that there is formed at least one undercut which serves to form a positively locking connection between the first fastening portion (82, 22) and the recess (42) of the link element (4).

10. Chassis system according to one of the preceding claims,
wherein the adhesive layer (6) is distributed in the contact region the respectively corresponding components such that an ingress of moisture and contaminants into the contact region is prevented.

11. Chassis system according to one of the preceding claims,
wherein the link element (4) is a cast part, and
wherein the link element (4) has a geometry which is suitable for ensuring an expedient force flow from the axle stub element (8) to a receiving region (44) for a spring element or to the recess (42).

12. Chassis system for utility vehicles, comprising an axle stub element (8) and a link element (4),
wherein the link element (4) has a recess (42) and the axle stub element (8) has a first fastening portion (82),
wherein, in a first state, the first fastening portion (82) of the axle stub element (8), provided with an adhesive layer (6), can be inserted into the recess (42) of the link element (4),
wherein, in a second state, the first fastening portion (82) is deformed such that a non-positively locking connection is produced between the first fastening portion (82) and the recess (42),
wherein, in the second state, a cohesive connection is formed between the first fastening portion (82) and the recess (42) by means of the adhesive layer (6),
wherein an axle tube element (2) is provided which is fixed to the link element (4) in order, in particular, to increase the stability of the chassis system.

13. Method for producing a chassis system for utility vehicles, comprising the steps:
a) providing an axle stub element (8) and a link element (4),
wherein the axle stub element (8) has a first fastening portion (82), and wherein the link element (4) has a recess (42) into which the first fastening portion (82) can be inserted,
b) applying an adhesive layer (6) to the first fastening portion (82) of the axle stub element (8),
c) inserting the first fastening portion (82) into the recess (42) of the link element (4),
d) deforming, in particular flaring, the first fastening portion (82) in order to produce a non-positively locking connection between the first fastening portion (82) and the recess (42) and a cohesive connection between the first fastening portion (82), the adhesive layer (6) and the recess (42) of the link element (4), and
e) fixing an axle tube element (2), by way of a first fastening portion (22), in a recess of the link element (4).

14. Method according to Claim 13,
wherein the axle tube element (2) is, by way of its first fastening portion (22), arranged in the recess of the link element (4) and deformed such that a non-positively locking connection is generated between the first fastening portion (22) of the axle tube element (2) and the link element (4),
wherein, by means of an adhesive layer (6), a cohesive connection is produced between the first fastening portion (82) and the link element (4).

## Revendications

1. Système de train de roulement pour véhicules utilitaires, incluant un élément de moignon d'essieu (8) et un élément formant bielle (4),
dans lequel l'élément formant bielle (4) comporte une échancrure (42) et l'élément de moignon d'essieu (8) comprend une première portion de fixation (82),
dans lequel la première portion de fixation (82) est agencée dans l'échancrure (42) de l'élément formant bielle (4) et est immobilisée, en raison d'une opération de déformation, par coopération de forces sur l'échancrure (42), et
dans lequel une couche adhésive (6) est prévue entre la première portion de fixation (82) et l'échancrure (42), via laquelle il se forme une coopération de matières entre la première portion de fixation (82) de l'élément de moignon d'essieu (8) et l'échancrure (42) de l'élément formant bielle (4), dans lequel il est prévu un élément d'essieu tubulaire (2) qui est immobilisé sur l'élément formant bielle (4), en particulier afin d'augmenter la stabilité du système de train de roulement.

2. Système de train de roulement selon la revendication 1,
dans lequel l'élément de moignon d'essieu (8) est réalisé d'une seule pièce.

3. Système de train de roulement selon la revendication 1 ou 2,
dans lequel l'élément d'essieu tubulaire (2) est immobilisé par coopération de forces et/ou par coopération de matières sur l'élément formant bielle (4).

4. Système de train de roulement selon l'une des revendications précédentes, dans lequel l'élément de moignon d'essieu (8) est agencé en décalage par rapport à l'élément d'essieu tubulaire (2) perpendiculairement à un axe d'extension principale de l'élément d'essieu tubulaire (2), afin d'immobiliser, en présence d'une liaison entre l'un des deux éléments (2 ou 8) avec l'élément formant bielle (4), l'autre élément respectif par coopération de forces sur l'élément formant bielle (4) par une opération de déformation.

5. Système de train de roulement selon l'une des revendications précédentes, dans lequel il est prévu un élément porteur (10), qui peut être immobilisé sur l'élément d'essieu tubulaire (2) et/ou sur l'élément de moignon d'axe (8) et/ou sur l'élément formant bielle (4), afin d'immobiliser sur le système de train de roulement des éléments additionnels du train de roulement.

6. Système de train de roulement selon la revendication 5,
dans lequel l'élément porteur (10) comporte une échancrure dans laquelle une seconde portion de fixation de l'élément d'essieu tubulaire (2) ou une seconde portion de fixation (84) de l'élément de moignon d'essieu (8) est susceptible d'être engagée à la presse, dans lequel une autre couche adhésive (6) est prévue entre l'échancrure de l'élément porteur (10) et la seconde portion de fixation (84) respective, afin de former une coopération de matières entre l'élément porteur (10) et l'un des éléments parmi l'élément d'essieu tubulaire (2) et l'élément de moignon de l'axe (8).

7. Système de train de roulement selon l'une des revendications précédentes, dans lequel l'élément formant bielle (4) est susceptible d'être immobilisé à une première extrémité distale en étant capable de pivoter sur le châssis d'un véhicule utilitaire, et
dans lequel l'élément formant bielle (4) comprend, à une seconde extrémité distale située à l'opposé de la première extrémité, une zone réceptrice (44) pour monter un élément à ressort et pour transmettre des forces depuis l'élément à ressort vers l'élément d'essieu tubulaire (2) et/ou vers l'élément de moignon d'essieu (8).

8. Système de train de roulement selon l'une des revendications précédentes, dans lequel la couche adhésive (6) est formée au moyen d'un polyuréthane ou d'une résine époxy ou d'un silicone.

9. Système de train de roulement selon l'une des revendications précédentes, dans lequel l'élément de moignon d'essieu (8) et/ou l'élément d'essieu tubulaire (2) est déformé de telle façon qu'il se forme au moins une contre-dépouille au moyen de laquelle est établie une coopération de formes entre la première portion de fixation (82, 22) et l'échancrure (42) de l'élément formant bielle (4).

10. Système de train de roulement selon l'une des revendications précédentes, dans lequel la couche adhésive (6) est répartie dans la zone de contact des composants respectivement correspondants de telle façon qu'elle empêche une pénétration d'humilité et de produits nuisibles dans la zone de contact.

11. Système de train de roulement selon l'une des revendications précédentes, dans lequel l'élément formant bielle (4) est une pièce de fonderie, et
dans lequel l'élément formant bielle (4) présente une géométrie qui convient pour assurer un flux favorable des efforts depuis l'élément de moignon d'essieu (8) jusqu'à une zone de réception (44) pour un élément à ressort, ou jusqu'à l'échancrure (42).

12. Système de train de roulement pour véhicules utilitaires, incluant un élément de moignon d'essieu (8) et un élément formant bielle (4),
dans lequel l'élément formant bielle (4) comporte une échancrure (42) et l'élément de moignon d'essieu (8) comprend une première portion de fixation (82),
dans lequel, dans un premier état, la première portion de fixation (82) de l'élément de moignon d'essieu (8) pourvue d'une couche adhésive (6) est susceptible d'être introduite dans l'échancrure (42) de l'élément formant bielle (4),
dans lequel, dans un second état, la première portion de fixation (82) est déformée de telle façon qu'il se produit une coopération de forces entre la première portion de fixation (82) et l'échancrure (42),
dans lequel, dans le second état, il se forme au moyen de la couche adhésive (6) une coopération de matières entre la première portion de fixation (82) et l'échancrure (42),
dans lequel il est prévu un élément d'essieu tubulaire (2), qui est immobilisé sur l'élément formant bielle (4), en particulier afin d'augmenter la stabilité du système de train de roulement.

13. Procédé pour réaliser un système de train de roulement pour véhicules utilitaires, comprenant les étapes consistant à :
a) préparer un élément de moignon d'essieu (8) et un élément formant bielle (4), dans lequel l'élément de moignon d'essieu (8) comprend une première portion de fixation (82), et
dans lequel l'élément formant bielle (4) comporte une échancrure (42) dans laquelle la première portion de fixation (82) peut être introduite,
b) appliquer une couche adhésive (6) sur la première portion de fixation (82) de l'élément de moignon d'essieu (8),
c) introduire la première portion de fixation (82) dans l'échancrure (42) de l'élément formant bielle (4),
d) déformer, en particulier élargir, la première portion de fixation (82), afin d'établir une coopération de forces entre la première portion de fixation (82) et l'échancrure (42) et une coopération de matières entre la première portion de fixation (82), la couche adhésive (6), et l'échancrure (42) de l'élément formant bielle (4), et
e) immobiliser un élément d'essieu tubulaire (2) via une première portion de fixation (22) dans une échancrure de l'élément formant bielle (4).

14. Procédé selon la revendication 13,
dans lequel l'élément d'essieu tubulaire (2) est agencé via sa première portion de fixation (22) dans l'échancrure de l'élément formant bielle (4), et est déformé de telle façon qu'il se produit une liaison à coopération de forces entre la première portion de fixation (22) de l'élément d'essieu tubulaire (2) et l'élément formant bielle (4),
dans lequel, via une couche adhésive (6), on établit une coopération de matières entre la première portion de fixation (82) et l'élément formant bielle (4).
